# EUROPEAN PATENT SPECIFICATION

(11) **EP 3 423 421 B1**
(45) Date of publication and mention of the grant of the patent: **09.12.2020**
(21) Application number: 17760944.3
(22) Date of filing: 03.03.2017
(51) Int. Cl.: C04B 7/345, C04B 7/38, C04B 7/44, C04B 28/18, C04B 40/02, C04B 111/80

(54) **WHITE CARBONATABLE CALCIUM SILICATE BASED CEMENTS AND METHOD OF PREPARATION**
AUF WEISSEM KARBONISIERBAREM CALCIUMSILIKAT BASIERENDE ZEMENTE UND VERFAHREN ZUR HERSTELLUNG DAVON
CIMENTS BLANCS À BASE DE SILICATE DE CALCIUM CARBONATABLE ET LEUR PROCÉDÉ DE PRÉPARATION

(30) Priority: 04.03.2016 US 201662304107 P
(43) Date of publication of application: 09.01.2019
(73) Proprietor: Solidia Technologies, Inc., Piscataway, NJ 08854 (US)
(72) Inventor: SAHU, Sadananda, Tallahassee, FL 32309 (US); QUINN, Sean, North Plainfield, NJ 07060 (US); SETH, Anuj, East Brunswick, NJ 08816 (US); BRYANT, Jayson, Easton, PA 18045 (US); RAVIKUMAR, Deepak, Piscataway, NJ 08854 (US)
(74) Representative: Dentons Patent Solutions Rechtsanwaltsgesellschaft mbH
(86) International application number: PCT/US2017/020778
(87) International publication number: WO 2017/152120

(56) References cited:
- WO-A1-2014/159832
- WO-A1-2016/022485
- CN-A- 101 139 182
- GB-A- 1 174 919
- BUTT YU. M. et al.: "Portlandtsemente umerennoy ekzotermiyey = [Portland cement mild exotherm]", Tekhnologiya tsementa i drugikh vyazhuschikh materialov = [TECHNOLOGY OF CEMENT AND OTHER BINDENING MATERIALS], 1976, pages 335-336, XP009513917, MOSKVA
- Anonymous: "Let HuberCrete Calcium Carbonate Help You Produce the Brightest White Concrete Building Products Possible Staircase manufactured with HuberCrete", , 1 April 2015 (2015-04-01), pages 1-6, XP055594752, Retrieved from the Internet: URL:https://www.hubermaterials.com/userfil es/files/PFDocs/Let-HuberCrete-Calcium-Car bonate-Help-You-Produce-the-Brightest-Whit e-Concrete-Building-Products-Possible.pdf [retrieved on 2019-06-06]

## Description

### Priority Claims and Related Patent Applications

### Field of the Invention

The invention generally relates to calcium silicate-based cements. More particularly, the invention relates to novel, carbonatable calcium silicate-based, white cements and methods of production and use thereof. The white cement disclosed herein may be used in a variety of cement and concrete applications in the infrastructure, construction, pavement and landscaping industries.

### Background of the Invention

White Portland cements are cements produced to have a white or near white color for applications where light color or white concretes are employed for high aesthetic value. In order to obtain a white product, the level of iron and other species that contribute to color must be carefully controlled. The need for control of these species through raw material selection and processing constraints add considerable cost to the manufacture of a white Portland cement. Additionally, decreasing the level of iron and other colorant species creates a raw mix that is challenging to burn in the kiln, resulting in reduced throughput and increased fuel consumption.

A novel approach is needed to create a more economical white cement, which offers more flexibility in raw material selection and processing.

WO 2016/022485 A discloses novel carbonatable calcium silicate compositions and carbonatable calcium silicate phases that are made from widely available, low cost raw materials by a process suitable for large-scale production. The method is flexible in equipment and production requirements and is readily adaptable to manufacturing facilities of conventional cement. The method offers an exceptional capability to permanently and safely sequester CO₂.

GB 1174919 A discloses a method of making pseudowollastonite clinker from a raw mixture powder consisting of a limy raw material and of a silicic raw material together with some fluxes, which is then formed into compact grains and sintered using a rotary kiln at temperature in the range of 1250°-1470°C.

### Summary of Invention

The present invention provides a new class of carbonatable calcium silicate clinkers and the ground cement product therefrom with a high brightness for use in products with high aesthetic considerations. Carbonatable calcium silicate-based cements are a novel class of non-hydraulic cements that gain strength primarily through a reaction with CO_{2(*g*)} and can serve as a replacement for conventional hydraulic cements, such as Portland cement. The production and utilization of carbonatable calcium silicate-based cements results in significant reduction of associated energy consumption and enjoys a much favorable carbon footprint through sequestration of CO₂ in concrete products.

In one aspect, the invention generally relates to a white carbonatable calcium silicate cement composition. The cement composition includes: one or more discrete crystalline calcium silicate phases selected from CS (wollastonite or pseudowollastonite), C3S2 (rankinite), C2S (belite, larnite, bredigite), and an amorphous calcium silicate phase, wherein the one or more discrete crystalline calcium silicate phases form about 30% or more by mass of the total phases, and wherein elemental Ca and elemental Si are present in the composition at a molar ratio from about 0.8 to about 1.2; and metal oxides of Al, Fe and Mg are present at about 30% or less by mass, wherein the total color-imparting oxides of one or more of metals selected from Fe, Ti, Mn and Cr are present in an amount of less than about 1.5% by mass of the total cement composition, wherein the cement composition is characterized by a reflectance value (L*), as measured from the Hunter L*a*B color scale, of greater than about 85% and wherein each of the crystalline and amorphous phases is suitable for carbonation with CO₂. The cement composition may be suitable for carbonation with CO₂ at a temperature of about 30°C to about 90°C to form a composite material comprising a binder matrix with a mass gain of about 10% or more.

Also disclosed herein, but not claimed, is a composite material formed by carbonation of a white carbonatable calcium silicate cement disclosed herein.

In yet another aspect, the invention generally relates to a method for producing a white carbonatable calcium silicate cement. The method includes: providing a raw material set comprising of CaO and SiO₂; grinding the raw material set to obtain a precursor mixture, wherein the molar ratio of CaO to SiO₂ is from about 0.8 to about 1.2, wherein the precursor mixture comprises: (i) less than about 30% by mass the oxides of Al, Fe and Mg, and (ii) less than about 1.5% by mass of total metal oxides of one or more metals selected from Fe, Ti, Mn and Cr; firing the precursor mixture to a temperature in the range from about 1300°C to about 1,400°C to obtain a white carbonatable calcium silicate clinker; wherein the obtained white carbonatable calcium silicate clinker comprises one or more discrete crystalline calcium silicate phases selected from CS (wollastonite or pseudowollastonite), C3S2 (rankinite), C2S (belite, larnite, bredigite), and an amorphous calcium silicate phase, wherein the one or more discrete crystalline calcium silicate phases form about 30% or more by mass of the total phases, wherein each of the crystalline and amorphous phases is suitable for carbonation with CO₂; and grinding the white carbonatable calcium silicate clinker to a fineness of about 200 to about 800 m²/kg to produce the white carbonatable calcium silicate cement having a reflectance value (L*), as measured from the Hunter L*a*B color scale, of greater than about 85%.

Preferably, the precursor mixture includes less than about 21.2% *(e.g.,* less than about 20%, less than about 17.5%, less than about 15%, less than about 12.5%) by mass the oxides of Al, Fe and Mg, and (ii) less than about 1.3% *(e.g.,* less than about 1.0%, less than about 0.8%, less than about 0.5%) by mass of total metal oxides of one or more metals selected from Fe, Ti, Mn and Cr.

### Brief Description of the Drawings

The objects and features of the invention can be better understood with reference to the drawings described below, and the claims. The drawings are not necessarily to scale, emphasis instead generally being placed upon illustrating the principles of the invention. In the drawings, like numerals are used to indicate like parts throughout the various views.
**FIG. 1** is a pressure-temperature phase diagram showing the phases present in the reversible reaction CaCO₃ +SiO₂ ↔ CaSiO₃ (calcium silicate) + CO₂.
**FIG. 2** is a pressure-temperature phase diagram showing the phases present in the reversible reaction 3CaCO₃ + 2CaSiO₃ ↔ 2Ca₂SiO₄·CaCO₃ + CO₂.
**FIG. 3** is a phase diagram of the CaO-SiO₂-CO₂ system at a pressure of 1 kilobar.
**FIG. 4** is a pressure-temperature phase diagram showing the phases present in the reversible reaction MgO + CO₂ ↔ MgCO₃.
**FIG. 5** is a pressure-temperature phase diagram showing the equilibrium curves for the reversible reaction MgO + CO₂ ↔ MgCO₃ as a function of the proportion of CO₂ in an inert gas.
**FIG. 6** is a temperature-composition phase diagram that illustrates the stability regions for various phases in the CaCO₃-MgCO₃ system.
**FIG. 7** is a tetrahedron diagram illustrating the phase relationships among the compounds CaO, MgO, SiO₂ and CO₂, and showing the CO₂ deficient region below the Cc-Di-Wo and the Cc-Wo-Mo planes (shaded), where Cc denotes calcite, Wo denotes Wollastonite, Ak denotes Akermanite, Di denotes diopside, and Mo denotes monticellite (CaMgSiO₄).
**FIG. 8** is a pressure-temperature phase diagram illustrating the phase relationships among the compounds CaO, MgO, SiO₂ and CO₂, with univariant curves emanating from the quaternary invariant point involving the phases calcite (Cc), diopside (Di), forsterite (Fo), monticellite (Mo), Akermanite (Ak), and CO₂. The inset is the phase diagram for the three compound systems of CaCO₃, MgO and SiO₂.
**FIG. 9** is a schematic diagram of a CO₂ composite material curing chamber that provides humidification according to principles of the invention.
**FIG. 10** is a schematic diagram of a curing chamber with multiple methods of humidity control as well as ability to control and replenish CO₂ using constant flow or pressure regulation and that can control the temperature according to principles of the invention.
**FIG. 11****.** Exemplary photo of Experimental Cement 1.
**FIG. 12****.** Exemplary photo of Experimental Cement 2.
**FIG. 13****.** Exemplary photo of Experimental Cement 3.
**FIG. 14****.** Exemplary photo of Experimental Cement 4.

### Detailed Description of the Invention

The invention provides a new class of carbonatable calcium silicate-based, white clinkers and ground cements, as well as methods of their production and use thereof. The disclosed white clinkers and cements exhibit a high brightness and are suitable for use in products that require high aesthetic considerations.

Carbonatable calcium silicate cements are a novel class of non-hydraulic cements that gain strength primarily through a reaction with CO₂ and can serve as a replacement for conventional hydraulic cements. These materials can be produced and utilized with significantly reduced energy requirement and CO₂ emissions. The disclosed carbonatable calcium silicate compositions are made from widely available, low cost raw materials by a process suitable for large-scale production with flexible equipment and production requirements. Use of these special cements to make concrete products is accompanied by a permanent sequestration of CO₂. A wide variety of applications can benefit from the invention, from construction, pavements and landscaping, to infrastructure and transportation through improved energy consumption and more desirable carbon footprint.

White clinkers are manufactured and ground to cement powder to provide a high brightness (*L*, or reflectance, from the Hunter L*a*b color scale > 85%). These white cements are used to create white or pigmented concretes with high aesthetic standards. The color of the clinker, and consequently the cement, is controlled through the raw material chemistry and through processing.

Ordinary Portland clinkers and cement (OPC) typically contain a ferrite (Ca₂(Al,Fe)O₅) phase that can vary but is typically 10% by mass. This phase is responsible for the characteristic gray color of OPC. The ferrite phase can host a wide range of substitution ions at various oxidation states. Ions associated with the color of the ferrite phase in OPC include primarily transition metals with multiple valences, for example, Fe, Ti, Mn, Cr, and Zn. Mg has also been shown to have a substantial darkening effect when substituting into the ferrite in conjunction with the presence of various transition metals. The high levels of substitutions and resultant electronic effects in the impure ferrite phase create high absorbance of visible light and thus a dark color in OPC.

Compared to OPC, carbonatable calcium silicate-based cements disclosed herein have a much higher tolerance for species that serve as colorants in OPC. Due to the bulk chemistry of carbonatable calcium silicate cements disclosed herein, ferrite is present only in trace levels if present at all. The species commonly responsible for darkening OPC, for example, Fe, Ti, Mn, and Cr, are instead incorporated into either the melilite (Ca,Na)₂(Al,Fe,Mg,Si)₂SiO₇) or amorphous phases. The differences in bonding and relative position of the colorant ions between the OPC ferrite and the carbonatable calcium silicate melilite and amorphous phases contributes to a reduced impact of each individual species on the color of the phase and thus the cement.

The ferrite phase present in OPC has a high index of refraction of approximately 1.9-2.0 (averaged from biaxial refractive index values) depending on composition. The high index of refraction contributes to the scattering of light from ferrite phase and, through the phenomenon of diffuse reflectance, contributes its color to the bulk of the cement.

In contrast, the melilite phase present in carbonatable calcium silicate cements disclosed herein has a low refractive index of approximately 1.5-1.8. This lower refractive index corresponds to a low reflectivity and scattering, resulting in minimal contribution to the color of the final cement from diffused reflection.

The bulk composition of a white OPC clinker typically contains <0.5% Fe₂O₃ and minimum TiO₂, Mn₂O₃ and Cr₂O₃. The most common elements influencing the color of the cement - Fe₂O₃, TiO₂ and Mn₂O₃ strongly influence brightness, while Cr₂O₃ can darken and add a green tint. Proper control of these species can allow OPC to achieve an L-value exceeding 85%. Typical white cements contain <0.3% Fe₂O₃ and <0.03% Mn₂O₃ To achieve such low levels of colorants in OPC, especially for iron, the raw materials must be carefully selected. This requirement results in a substantial increase in the cost of raw materials of OPC clinker because only low iron precursor sources of CaO, SiO₂ and Al₂O₃ can be used.

In addition to the raw mix composition, several changes to the clinker production process are typically needed to ensure to produce white OPC. In some situations the raw material grinding, fuel choice, firing regime and clinker cooling must be modified to achieve a white product. Each of these additional process controls introduces added cost to the production of the white cement clinker.

In many cases the raw mill must be modified to use ceramic or other high hardness grinding media and surfaces to avoid contamination of the raw materials by the steel media typically used in the raw material and cement grinding process. This contamination can introduce Fe₂O₃, MnO and Cr₂O₃ into the kiln to the detriment of the color of the OPC product. Similarly, the ash produced by the combustion of coal in the kiln can be incorporated into the OPC clinker. This ash adds Fe₂O₃, TiO₂, MnO, Cr₂O₃ and other trace colorants to the OPC clinker to the detriment of the product color. A similar negative impact can be attributed to many alternative fuels with a non-volatile combustion residue such as automotive tires or shredded plastic waste. Due to fuel ash, in some circumstances it may be necessary to use a more expensive, low ash coal, remove alternative fuel heat sources, or switch from coal combustion to oil or natural gas combustion entirely to achieve a white OPC product.

The low iron content of the raw mix from which the white OPC clinker derives its characteristic color also limits the liquid phase formation at normal processing temperatures. In order to achieve the proportion of liquid phase necessary for clinkering and the formation of C3S (alite, Ca₃SiO₅) in white OPC clinker, the processing temperature must be higher, typically approaching 1,500°C. Achieving this high temperature has negative impacts on kiln operation, including increased fuel consumption and decreased clinker production rates. In some cases, fluxing agents such as fluorspar (CaF₂) or calcium chloride (CaCl₂) are added to enhance the burnability of the white OPC raw mix without increasing the iron content.

In contrast, the lower optical response to colorant species in the carbonatable calcium silicate-based cement clinker disclosed herein allows a significantly larger range of less pure and less expensive materials to be used to economically produce white cement clinker. The tolerance for colorant species also entails that few restrictions in the selection of grinding media or fuel sources to avoid contamination by colorant species.

The oxidation state of the iron component of OPC also plays a role in determining the final color of the cement clinker. Fe³⁺ has a stronger color effect than Fe²⁺. In order to encourage the reduction of Fe³⁺ to Fe²⁺ in the kiln and prevent its reoxidation during cooling, some specific burning and cooling strategies can be used. A bleaching process achieved by burning with a reducing or very low oxygen condition can be employed either on the main burner or using a secondary burner on the clinker leaving the kiln. In some instances, the secondary burner serves to create a reducing atmosphere. The clinker is then cooled rapidly without access to high concentrations of oxygen, in some cases by water cooling, from 1,400 °C - 600 °C to prevent the oxidation of Fe²⁺. This process is important to produce white OPC cements in areas where creating a cement chemistry with <0.3% Fe₂O₃ content is difficult since it effectively decreases the amount of color-influencing Fe₂O₃. Running kiln burners without sufficient oxygen can reduce the effectiveness of combustion, increasing fuel consumption, increasing ash or residue, and result in the reduction of nitrogen and thus undesirable NOₓ emissions. Changes to the cooler, especially a water quenching process, can reduce the ability to effectively recycle and reintroduce heat to the kiln and preheater which reduces the thermal efficiency of the entire process.

The low impact of colorant species on the overall brightness of carbonatable calcium silicate-based cement clinker also reduces the need for special control of the clinker cooling. Process controls used to prevent the oxidation of Fe²⁺ produced at high kiln temperatures include rapid cooling under a reducing atmosphere or water quenching of the clinker. While these steps are needed for producing white OPC, they can be eliminated in white carbonatable calcium silicate cement production.

The term "calcium silicate" material, as used herein, generally refers to naturally-occurring minerals or synthetic materials that are comprised of one or more of a group of calcium silicate phases including CS (wollastonite or pseudowollastonite, and sometimes formulated CaSiO₃ or CaO·SiO₂), C3S2 (rankinite, and sometimes formulated as Ca₃Si₂O₇ or 3CaO·2SiO₂), C2S (belite, β-Ca₂SiO₄ or larnite, Ca₇Mg(SiO₄)₄ or bredigite, α-Ca₂SiO₄ orγ-Ca₂SiO₄, and sometimes formulated as Ca₂SiO₄ or 2CaO·SiO₂), a calcium-silicate based amorphous phase, each of which material may include one or more other metal ions and oxides (*e.g*., aluminum, magnesium, iron or manganese oxides), or blends thereof, or may include an amount of magnesium silicate in naturally-occurring or synthetic form(s) ranging from trace amount (1%) to about 50% or more by weight.

In the production of carbonatable calcium silicate cement clinker, a combination of raw materials comprising of various limestones, clays, shales, sand or other sources of CaO and SiO₂ are blended and ground in such a proportion to achieve a CaO / SiO₂ molar ratio of approximately 1.0. To produce a white carbonatable calcium silicate clinker, the levels of Fe, Ti, Mn, Cr and Zn are controlled by selection of raw materials to limit the sum of the oxides of these elements to less than 1.5% by mass. Decreasing the limit of Fe, Ti, Mn, Cr and Zn oxides in the raw mix below this level may increase the whiteness of the resulting clinker, allowing for finer control of the clinker color through the selection of raw materials.

The reduction in transition metal oxides, especially Fe₂O₃, in the creating of white carbonatable calcium silicate clinker raw mix limits the liquid phase available for clinkering reactions in rotary kiln processing. To achieve a white carbonatable calcium silicate clinker the burning zone temperature is selected to about between about 1,300°C and about 1,400°C, rather than the burning zone temperature of below 1,300°C (1,200°C-1,300°C) when a non-white clinker is desired.

In one aspect, the invention generally relates to a white carbonatable calcium silicate cement composition. The cement composition includes: one or more discrete crystalline calcium silicate phases selected from CS (wollastonite or pseudowollastonite), C3S2 (rankinite), C2S (belite, larnite, bredigite), and an amorphous calcium silicate phase, wherein the one or more discrete crystalline calcium silicate phases form about 30% or more by mass of the total phases, and wherein elemental Ca and elemental Si are present in the composition at a molar ratio from about 0.8 to about 1.2; and metal oxides of Al, Fe and Mg are present at about 30% or less by mass, wherein the total color-imparting oxides of one or more of metals selected from Fe, Ti, Mn and Cr are present in an amount of less than about 1.5% by mass of the total cement composition, wherein the cement composition is characterized by a reflectance value (L*), as measured from the Hunter L*a*B color scale, of greater than about 85% and wherein each of the crystalline and amorphous phases is suitable for carbonation with CO₂. The cement composition may be suitable for carbonation with CO₂ at a temperature of about 30°C to about 90°C to form a composite material comprising a binder matrix with a mass gain of about 10% or more.

The calcium silicate compositions contain amorphous (non-crystalline) calcium silicate phases in addition to the crystalline phases described above. The amorphous phase may additionally incorporate Al, Fe and Mg ions and other impurity ions present in the raw materials.

Each of these crystalline and amorphous calcium silicate phases is suitable for carbonation with CO₂.

In certain embodiments, the cement composition includes one or more residual CaO (lime) and SiO₂ (silica) phases. The calcium silicate composition may also include small quantities of C3S (alite, Ca₃SiO₅). The C2S phase present within the calcium silicate composition may exist in any α-Ca₂SiO₄, β-Ca₂SiO₄ or γ-Ca₂SiO₄ polymorph or combination thereof.

In certain embodiments, the cement composition includes one or more melilite type phases having the general formula (Ca,Na,K)₂[(Mg, Fe²⁺,Fe³⁺,Al,Si)₃O₇].

The molar ratio of elemental Ca to elemental Si of the cement composition is from about 0.80 to about 1.20. In certain preferred embodiments, the molar ratio of Ca to Si of the cement composition is from about 0.85 to about 1.15. In certain preferred embodiments, the molar ratio of Ca to Si of the cement composition is from about 0.90 to about 1.10. In certain preferred embodiments, the molar ratio of Ca to Si of the cement composition is from about 0.95 to about 1.05. In certain preferred embodiments, the molar ratio of Ca to Si of the cement composition is from about 0.98 to about 1.02. In certain preferred embodiments, the molar ratio of Ca to Si of the composition is from about 0.99 to about 1.01.

The cement composition includes one or more calcium silicate phases existing in an amorphous state and one or more calcium silicate phases existing in a crystalline state.

The cement composition includes calcium silicate phases existing in both the crystalline state and the amorphous state.

The cement composition is a powder having a reflectance value (L*) of greater than about 85%. In certain embodiments, the cement composition is a powder having a reflectance value (L*) of greater than 90%. In certain embodiments, the cement composition is a powder having a reflectance value (L*) of greater than 95%.

In certain embodiments of the cement composition, the metal oxides of one or more metal selected from Fe, Ti, Mn and Cr are incorporated into a melilite type phase. In certain embodiments of the cement composition, the metal oxides of one or more metal selected from Fe, Ti, Mn and Cr are incorporated into an amorphous phase. In certain embodiments of the cement composition, the metal oxides of one or more metal selected from Fe, Ti, Mn and Cr are incorporated into a melilite phase and an amorphous phase.

In certain embodiments of the cement composition, the one or more melilite phases are characterized by a refractive index between about 1.5 and about 1.8 (*e.g.,* about 1.5, 1.6, 1.7, 1.8).

The discrete calcium silicate phases in the cement composition that are suitable for carbonation will be referred to as reactive phases. The reactive phases may be present in the composition in any suitable amount. In certain embodiments, the reactive phases are present at about 50% or more by mass. In certain embodiments, the reactive phases are present at about 60% or more by mass. In certain embodiments, the reactive phases are present at about 70% or more by mass. In certain embodiments, the reactive phases are present at about 80% or more by mass. In certain embodiments, the reactive phases are present at about 90% or more by mass. In certain embodiments, the reactive phases are present at about 95% or more by mass.

The various reactive phases may account for any suitable portions of the overall reactive phases. In certain embodiments, the reactive phases of CS are present at about 10 to about 60 wt% (*e.g.,* about 15 wt% to about 60 wt%, about 20 wt% to about 60 wt%, about 25 wt% to about 60 wt%, about 30 wt% to about 60 wt%, about 35 wt% to about 60 wt%, about 40 wt% to about 60 wt%, about 10 wt% to about 50 wt%, about 10 wt% to about 40 wt%, about 10 wt% to about 30 wt%, about 10 wt% to about 25 wt%, about 10 wt% to about 20 wt%); C3S2 in about 5 to 50 wt% (*e.g.,* about 10 wt% to 50 wt%, about 15 wt% to 50 wt%, about 20 wt% to 50 wt%, about 30 wt% to 50 wt%, about 40 wt% to 50 wt%, about 5 wt% to 40 wt%, about 5 wt% to 30 wt%, about 5 wt% to 25 wt%, about 5 wt% to 20 wt%, about 5 wt% to 15 wt%); and C2S in about 5 wt% to 60 wt% (*e.g.,* about 10 wt% to about 60 wt%, about 20 wt% to about 60 wt%, about 25 wt% to about 60 wt%, about 30 wt% to about 60 wt%, about 35 wt% to about 60 wt%, about 40 wt% to about 60 wt%, about 5 wt% to about 50 wt%, about 5 wt% to about 40 wt%, about 5 wt% to about 30 wt%, about 5 wt% to about 25 wt%, about 5 wt% to about 20 wt%, about 5 wt% to about 20 wt%), and C in about 0 wt% to 3 wt% (*e.g.,* 0 wt%, 1 wt% or less, 2 wt% or less, 3 wt% or less, about 1 wt% to 2 wt%, about 1 wt% to 3 wt%, about 2 wt% to 3 wt%).

In certain embodiments, the reactive phases include a calcium-silicate based amorphous phase, for example, at about 40% or more (*e.g.,* about 45% or more, about 50% or more, about 55% or more, about 60% or more, about 65% or more, about 70% or more, about 75% or more, about 80% or more, about 85% or more, about 90% or more, about 95% or more, from about 40% to about 95%, from about 50% to about 95%, from about 60% to about 95%, from about 70% to about 95%, from about 40% to about 80%, from about 40% to about 60%) by mass of the total phases. It is noted that the amorphous phase may additionally incorporate impurity ions present in the raw materials.

The calcium silicate cement compositions of the invention are suitable for carbonation with CO₂. In particular, the cement composition of calcium silicate may be suitable for carbonation with CO₂ at a temperature of about 30 °C to about 90 °C to form CaCO₃ with mass gain of about 20% or more. The mass gain reflects the net sequestration of CO₂ in the carbonated products. In certain preferred embodiments, the composition is suitable for carbonation with CO₂ at a temperature of about 30 °C to about 90 °C (*e.g*., about 40 °C to about 90 °C, about 50 °C to about 90 °C, about 60 °C to about 90 °C, about 30 °C to about 80 °C, about 30 °C to about 70 °C, about 30 °C to about 60 °C, about 40 °C to about 80 °C, about 40 °C to about 70 °C, about 40 °C to about 60 °C) to form CaCO₃ with mass gain of 10% or more (*e.g.,* 15% or more, 20% or more, 25% or more, 30% or more).

Also disclosed herein, but not claimed, is a composite material formed by carbonation of a white carbonatable calcium silicate cement disclosed herein.

In yet another aspect, the invention generally relates to a method for producing a white carbonatable calcium silicate cement. The method includes: providing a raw material set comprising CaO and SiO₂; grinding the raw material set to obtain a precursor mixture, wherein the molar ratio of CaO to SiO₂ is from about 0.8 to about 1.2 , wherein the precursor mixture comprises: (i) less than about 30% by mass the oxides of Al, Fe and Mg, and (ii) less than about 1.5% by mass of total metal oxides of one or more metals selected from Fe, Ti, Mn and Cr; firing the precursor mixture to a temperature in the range from about 1300°C to about 1,400°C to obtain a white carbonatable calcium silicate clinker wherein the obtained white carbonatable calcium silicate clinker comprises one or more discrete crystalline calcium silicate phases selected from CS (wollastonite or pseudowollastonite), C3S2 (rankinite), C2S (belite, larnite, bredigite), and an amorphous calcium silicate phase, wherein the one or more discrete crystalline calcium silicate phases form about 30% or more by mass of the total phases, wherein each of the crystalline and amorphous phases is suitable for carbonation with CO₂; and grinding the white carbonatable calcium silicate clinker to a fineness of about 200 to about 800 m²/kg to produce the white carbonatable calcium silicate cement having a reflectance level (L*), as measured from the Hunter L*a*B color scale, of greater than about 85%.

Preferably, the precursor mixture includes less than about 21.2% (*e.g.,* less than about 20%, less than about 17.5%, less than about 15%, less than about 12.5%) by mass the oxides of Al, Fe and Mg, and (ii) less than about 1.3% (*e.g.,* less than about 1.0%, less than about 0.8%, less than about 0.5%) by mass total metal oxides of one or more metals selected from Fe, Ti, Mn and Cr.

In certain embodiments, the precursor mixture is prepared from a raw material set selected from one or more of limestone, sand, silts, sandstones, silica-rich clays, diatomaceous earths, marl, fly ash, and silica fume.

In certain embodiments, the raw material set is selected to achieve a precursor mixture with less than about 1.5% (*e.g.,* less than about 1.3%, less than about 1.0%, less than about 0.8%, less than about 0.5%) by mass of transition metal oxides.

The raw material set is selected to obtain a precursor composition with less than 1.5% (*e.g.,* less than about 1.3%, less than about 1.0%, less than about 0.8%, less than about 0.5%) by mass of total metal oxides of one or more metal selected from Fe, Ti, Mn and Cr.

In certain embodiments, firing the precursor mixture is performed at a temperature between about 1,300°C to about 1,330°C (*e.g.,* between about 1,300°C to about 1,350°C, between about 1,330°C to about 1,350°C, between about 1,350°C to about 1,400°C, between about 1,350°C to about 1,380°C, between about 1,380°C to about 1,400°C).

In certain embodiments, after firing the white carbonatable calcium silicate clinker is subjected to cooling by forced air in the range of 1,400°C to 500°C under an uncontrolled atmosphere. In certain embodiments, after firing the white carbonatable calcium silicate clinker is subjected to cooling by forced air in the range of 1,400°C to 500°C under a reducing atmosphere. In certain embodiments, after firing the white carbonatable calcium silicate clinker is subjected to a cooling in the range of 1,400°C to 500°C by quenching in water.

In certain embodiments, grinding the mixture of CaO and SiO₂ to obtain a precursor mixture is performed in a grinder with a steel grinding surface.

The method includes grinding the white carbonatable calcium silicate clinker to achieve a fineness of about 200 m²/kg to about 800 m²/kg to produce the white carbonatable calcium silicate cement. In certain embodiments, grinding the white carbonatable calcium silicate clinker achieves a fineness of about 200 m²/kg to about 400 m²/kg to produce the white carbonatable calcium silicate cement. In certain embodiments, grinding the white carbonatable calcium silicate clinker achieves a fineness of about 400 m²/kg to about 800 m²/kg to produce the white carbonatable calcium silicate cement. In certain embodiments, grinding the white carbonatable calcium silicate clinker achieves a fineness of about 400 m²/kg to about 600 m²/kg to produce the white carbonatable calcium silicate cement.

It is noted that preferably the carbonatable calcium silicate cement compositions of the invention do not hydrate. However, minor amounts of hydratable calcium silicate phases (*e.g.,* C2S, C3S and CaO) may be present. C2S exhibits slow kinetics of hydration when exposed to water and is quickly converted to CaCO₃ during CO₂ curing processes. C3S and CaO hydrate quickly upon exposure to water and thus should be limited to less than about 5% by mass.

The calcium silicate phases included in the calcium silicate composition do not hydrate when exposed to water. Due to this composites produced using a calcium silicate composition as the binding agent do not generate significant strength when combined with water. The strength generation is controlled by exposure of calcium silicate composition containing composites to specific curing regimes in the presence of CO₂.

It should be understood that, calcium silicate compositions, phases and methods disclosed herein can be adopted to use magnesium silicate phases in addition to calcium silicate phases. As used herein, the term "magnesium silicate" refers to naturally-occurring minerals or synthetic materials that are comprised of one or more of a groups of magnesium-silicon-containing compounds including, for example, Mg₂SiO₄ (also known as "fosterite") and Mg₃Si₄O₁₀(OH)₂ (also known as "talc") and CaMgSiO₄ (also known as "monticellite"), each of which material may include one or more other metal ions and oxides (*e.g.*, calcium, aluminum, iron or manganese oxides), or blends thereof, or may include an amount of calcium silicate in naturally-occurring or synthetic form(s) ranging from trace amount (1%) to about 50% or more by weight.

A major utility of the carbonatable composition of the invention is that it can be carbonated to form composite materials that are useful in a variety of application. The carbonation, for example, may be carried out reacting it with CO₂ via a controlled Hydrothermal Liquid Phase Sintering (HLPS) process to create bonding elements that hold together the various components of the composite material. For example in preferred embodiments, CO₂ is used as a reactive species resulting in sequestration of CO₂ and the creation of bonding elements in the produced composite materials with in a carbon footprint unmatched by any existing production technology. The HLPS process is thermodynamically driven by the free energy of the chemical reaction(s) and reduction of surface energy (area) caused by crystal growth. The kinetics of the HLPS process proceed at a reasonable rate at low temperature because a solution (aqueous or nonaqueous) is used to transport reactive species instead of using a high melting point fluid or high temperature solid-state medium.

Discussions of various features of HLPS and related topics can be found in U.S. Patent No. 8,114,367, U.S. Pub. No. US 2009/0143211 (Appl. Serial No. 12/271,566), U.S. Pub. No. US 2011/0104469 (Appl. Serial No. 12/984,299), U.S. Pub. No. 2009/0142578 (Appl. Serial No. 12/271,513), U.S. Pub. No. 2013/0122267 (Appl. Serial No. 13/411,218), U.S. Pub. No. 2012/0312194 (Appl. Serial No. 13/491,098), WO 2009/102360 (PCT/US2008/083606), WO 2011/053598 (PCT/US2010/054146), WO 2011/090967 (PCT/US2011/021623), U.S. Provisional Patent Application No. 61/708,423 filed October 1, 2012, and U.S. Pub. No. 2014/0127450 (Appl. Serial No. 14/045,758), U.S. Pub. No. 2015/0266778 (Appl. Serial No. 14/045,519), U.S. Pub. No. 2014/0127458 (Appl. Serial No. 14/045,766), U.S. Pub. No. 2014/0342124 (Appl. Serial No. 14/045,540), U.S. Pub. No. 2014/0272216 (Appl. Serial No. 14/207,413), U.S. Pub. No. 2014/0263683 (Appl. Serial No. 14/207,421), U.S. Patent Application Nos. 14/207,920, 14/209,238, filed March 13, 2014, U.S. Pub. No. 2014/0363665 (Appl. Serial No. 14/295,601), U.S. Pub. No. 2014/0361471 (Appl. Serial No. 14/295,402), U.S. Pub. No. 2016/0355439 (Appl. Serial No. 14/506,079), U.S. Pub. No. 2015/0225295 (Appl. Serial No. 14/602,313), U.S. Pub. No. 2015/0056437 (Appl. Serial No. 14/463,901), U.S. Pub. No. 2016/0168720 (Appl. Serial No. 14/584,249), U.S. Pub. No. 2015/0336852 (Appl. Serial No. 14/818,629), U.S. Pub. No. 2016/0031757 (Appl. Serial No. 14/817,193), U.S. Pub. No. 2016/0272544 (Appl. Serial No. 15/074,659), U.S. Pub. No. 2016/0096773 (Appl. Serial No. 14/874,350), U.S. Pub. No. 2016/0340261 (Appl. Serial No. 14/715,497), U.S. Pub. No. 2016/0272545 (Appl. Serial No. 15/074,692), Appl. Serial No. 15/290,328, filed Oct. 11, 2016.

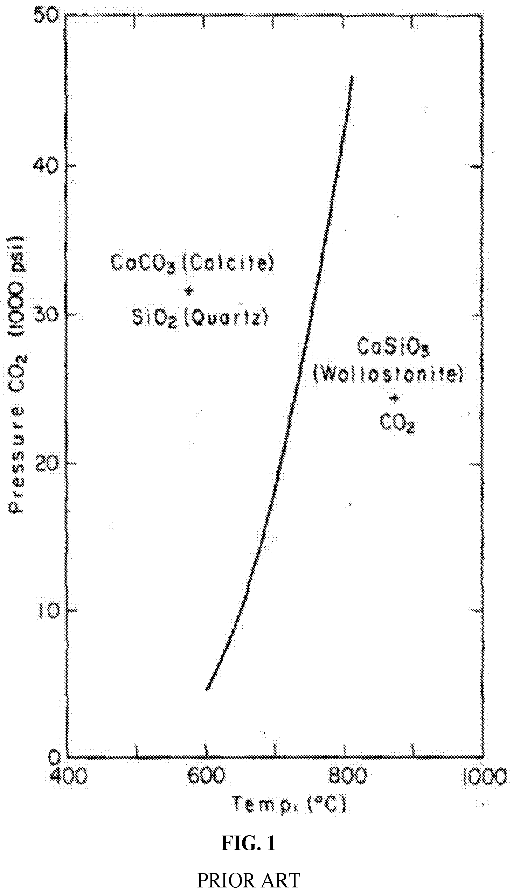

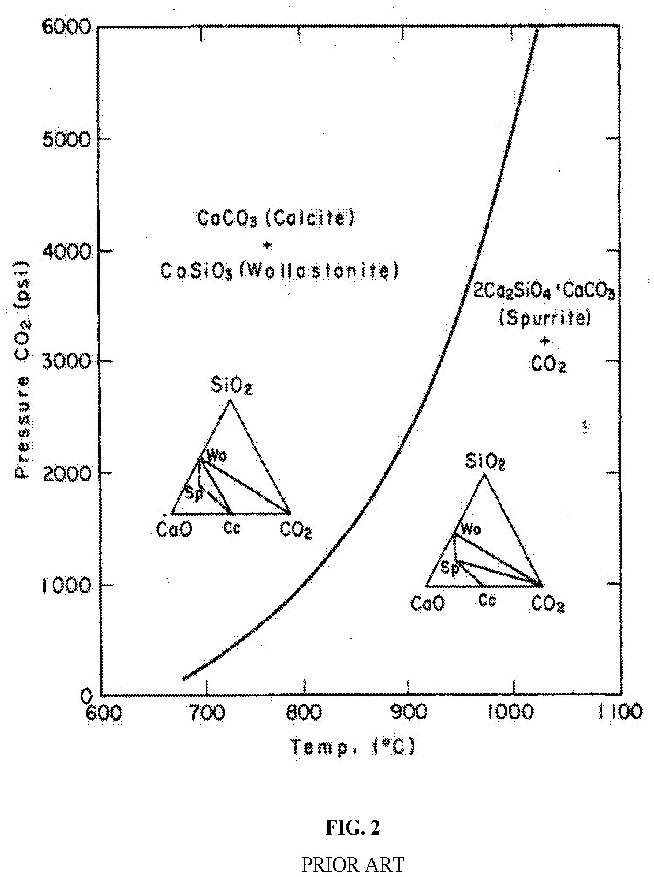

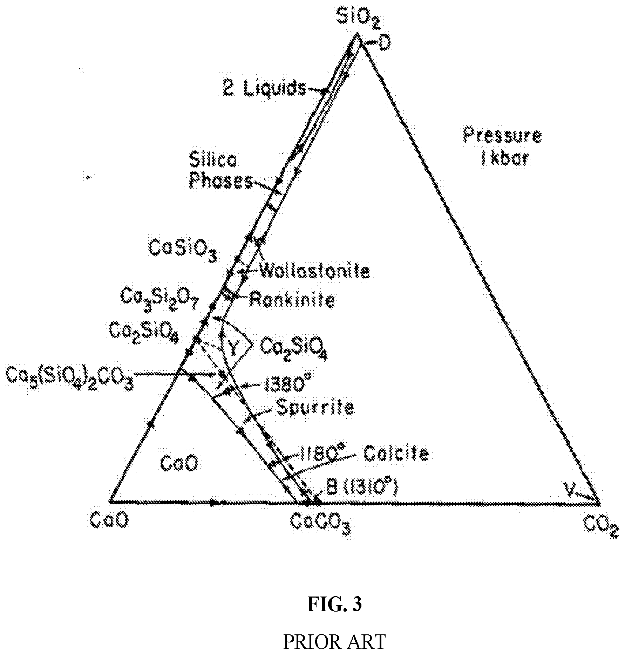

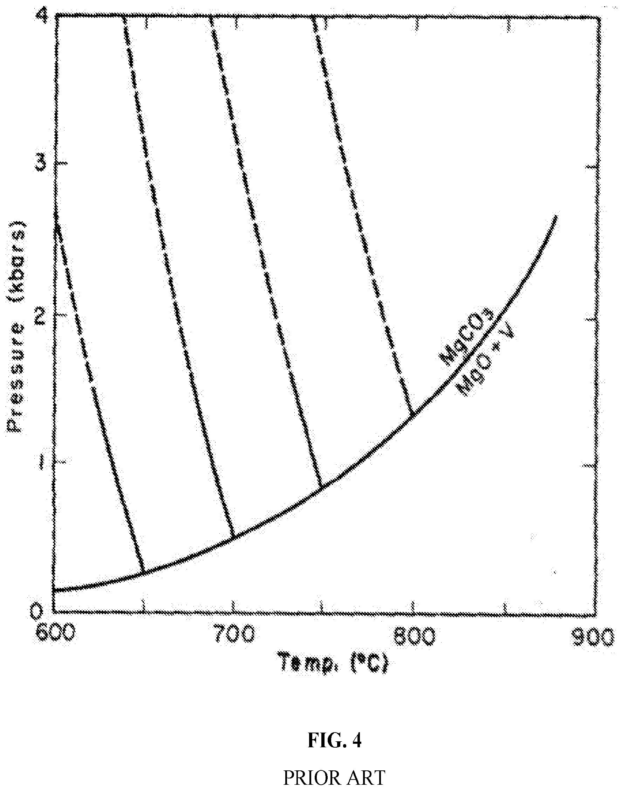

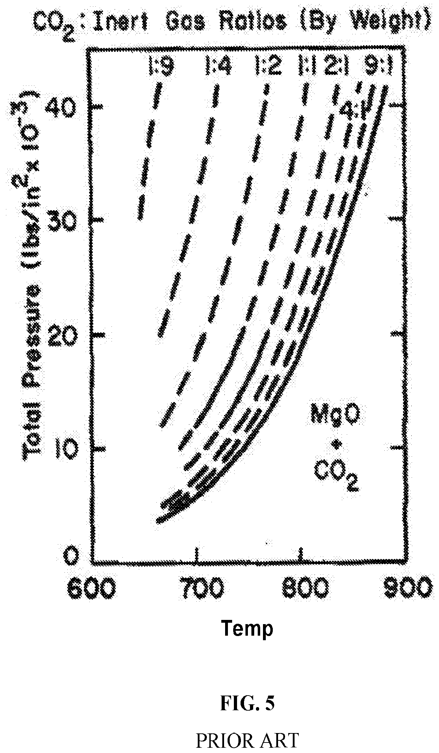

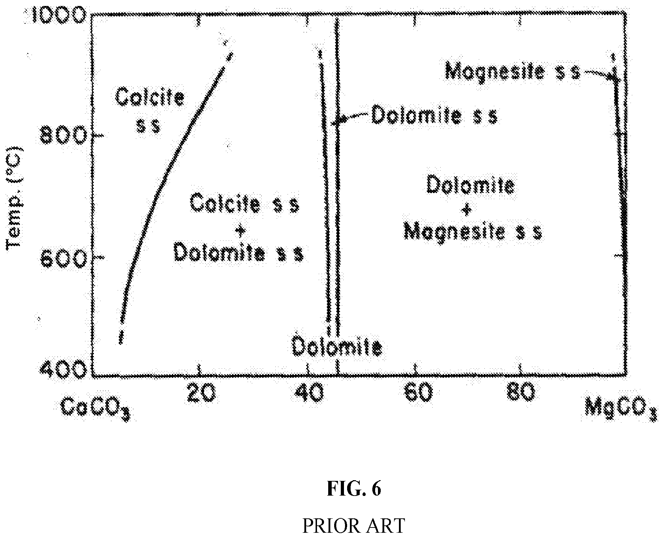

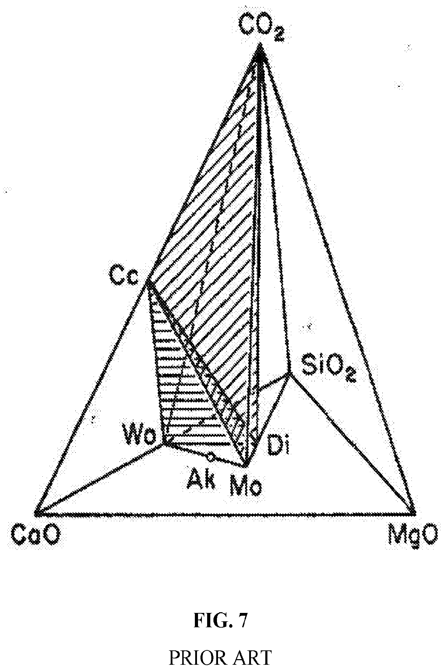

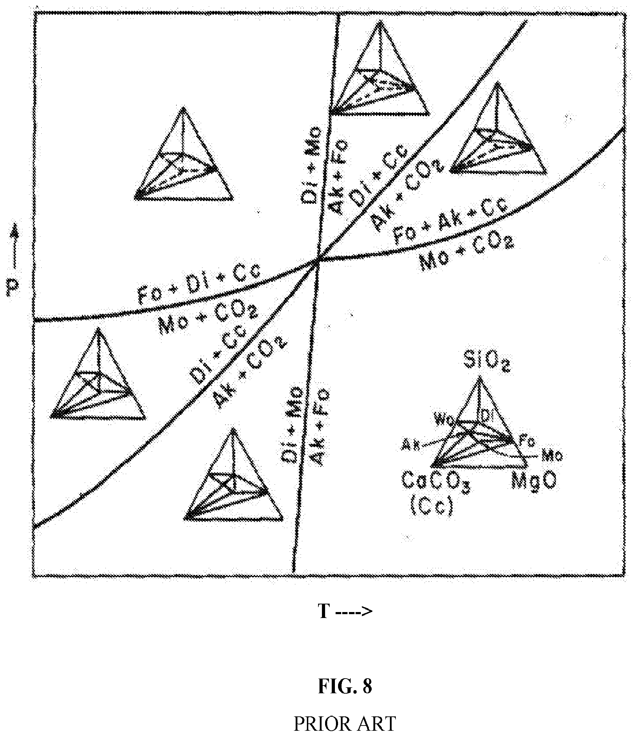

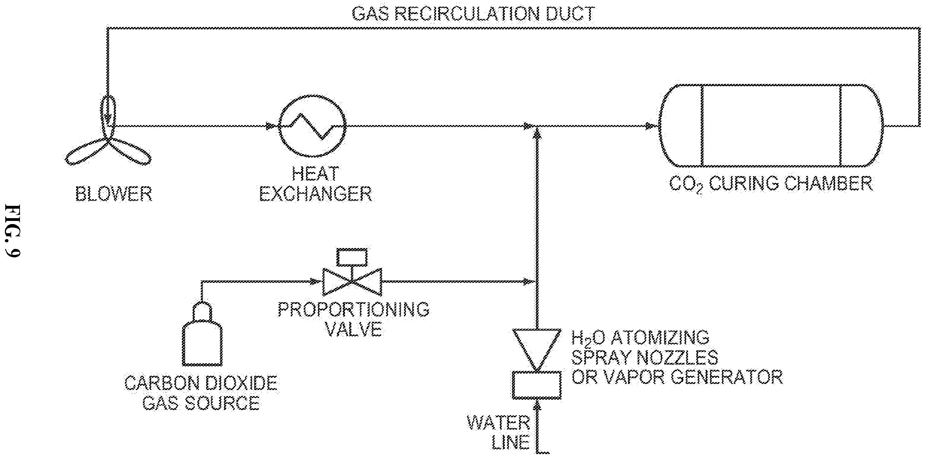

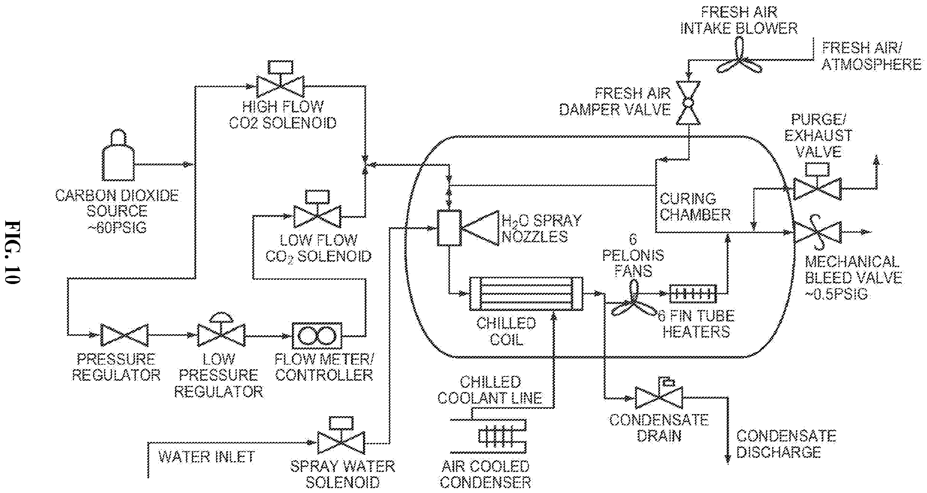

**FIG. 1** through **FIG. 8** are phase diagrams that show various phase interrelationships among some of the materials described. **FIG. 9** is a schematic diagram of a CO₂ composite material curing chamber that provides humidification according to principles of the invention. In **FIG. 9**, a water supply is provided and water vapor is added to the atmosphere that is circulating within the curing chamber. **FIG. 10** is a schematic diagram of a curing chamber with multiple methods of humidity control as well as ability to control and replenish CO₂ using constant flow or pressure regulation and that can control the temperature according to principles of the invention. This system is an example of a system that can provide closed loop control or control using feedback, in which set values of operating parameters such as CO₂ concentration, humidity, and temperature that are desired at specific times in the process cycle are provided, and measurements are taken to see whether the actual value of the parameter being controlled is the desired value.

In exemplary embodiments of carbonation of the composition of the invention, ground calcium silicate composition is used. The ground calcium silicate composition may have a mean particle size from about 1 µm to about 100 µm (*e.g*., about 1 µm to about 80 µm, about 1 µm to about 60 µm, about 1 µm to about 50 µm, about 1 µm to about 40 µm, about 1 µm to about 30 µm, about 1 µm to about 20 µm, about 1 µm to about 10 µm, about 5 µm to about 90 µm, about 5 µm to about 80 µm, about 5 µm to about 70 µm, about 5 µm to about 60 µm, about 5 µm to about 50 µm, about 5 µm to about 40 µm, about 10 µm to about 80 µm, about 10 µm to about 70 µm, about 10 µm to about 60 µm, about 10 µm to about 50 µm, about 10 µm to about 40 µm, about 10 µm to about 30 µm, about 10 µm to about 20 µm, about 1 µm, 10 µm, 15 µm, 20 µm, 25 µm, 30 µm, 40 µm, 50 µm, 60 µm, 70 µm, 80 µm, 90 µm, 100 µm), a bulk density from about 0.5 g/mL to about 3.5 g/mL (loose, *e.g.,* 0.5 g/mL, 1.0 g/mL, 1.5 g/mL, 2.0 g/mL, 2.5 g/mL, 2.8 g/mL, 3.0 g/mL, 3.5 g/mL) and about 1.0 g/mL to about 1.2 g/mL (tapped), a Blaine surface area from about 150 m²/kg to about 700 m²/kg (*e.g.,* 150 m²/kg, 200 m²/kg, 250 m²/kg, 300 m²/kg, 350 m²/kg, 400 m²/kg, 450 m²/kg, 500 m²/kg, 550 m2/kg, 600 m2/kg, 650 m2/kg, 700 m2/kg).

Any suitable aggregates may be used to form composite materials from the carbonatable composition of the invention, for example, calcium oxide-containing or silica-containing materials. Exemplary aggregates include inert materials such as trap rock, construction sand, pea-gravel. In certain preferred embodiments, lightweight aggregates such as perlite or vermiculite may also be used as aggregates. Materials such as industrial waste materials (*e.g.,* fly ash, slag, silica fume) may also be used as fine fillers.

The plurality of aggregates may have any suitable mean particle size and size distribution. In certain embodiments, the plurality of aggregates has a mean particle size in the range from about 0.25 mm to about 25 mm (*e.g.,* about 5 mm to about 20 mm, about 5 mm to about 18 mm, about 5 mm to about 15 mm, about 5 mm to about 12 mm, about 7 mm to about 20 mm, about 10 mm to about 20 mm, about 1/8" (3.2 mm), about ¼" (6.4 mm), about 3/8" (9.5 mm), about ½" (12.7 mm), about ¾" (19.1 mm)).

Chemical admixtures may also be included in the composite material; for example, plasticizers, retarders, accelerators, dispersants and other rheology-modifying agents. Certain commercially available chemical admixtures such as Glenium™ 7500 by BASF® Chemicals and Acumer™ by Dow Chemical Company may also be included. In certain embodiments, one or more pigments may be evenly dispersed or substantially unevenly dispersed in the bonding matrices, depending on the desired composite material. The pigment may be any suitable pigment including, for example, oxides of various metals (*e.g.,* black iron oxide, cobalt oxide and chromium oxide). The pigment may be of any color or colors, for example, selected from black, white, blue, gray, pink, green, red, yellow and brown. The pigment may be present in any suitable amount depending on the desired composite material, for example in an amount ranging from about 0.0% to about 10% by weight.

A variety of composite products can be produced from the carbonatable calcium silicate compositions of the invention by a process that does not require autoclave(s) and is suitable for continuous, large-scale production. The production methods are much improved over conventional pervious concretes in terms of both economics and environmental impact.

### Examples

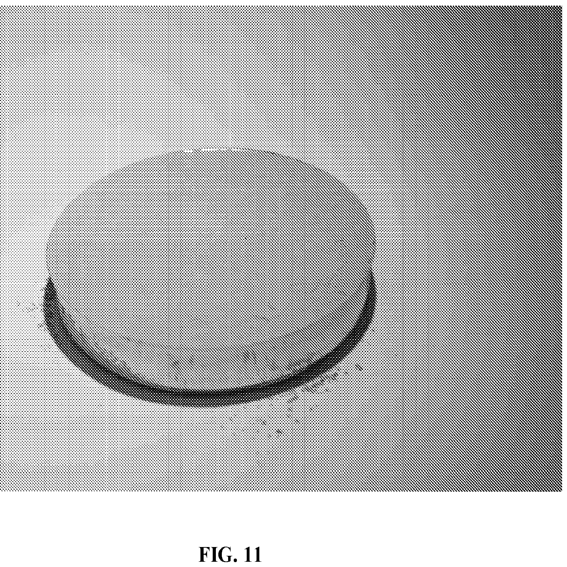

A carbonatable calcium silicate clinker (Experimental Cement 1, Reference Example) was produced using a 4-stage preheater kiln. No special consideration was made for the raw mix grinding, which proceeded using a typical steel media closed circuit ball mill also used for the grinding of gray cement raw meal. The kiln was fired with a mixture of coal and shredded plastic waste. The burning temperature in the kiln was approximately 1,260°C and was operating a normal (approximately 5% excess oxygen) burning atmosphere. The clinker was cooled using a reciprocating grate cooler with no special cooling procedure employed. The result of grinding this clinker is a carbonatable calcium silicate cement with a reflectance (L-value) of 77.7. The findings of this production are summarized in TABLE 1. An exemplary photo of Experimental Cement 1 is shown in **FIG. 11****.**

**Table 1: The raw material composition (from XRF), burning zone temperature, and L-value reflectance as determined by spectrocolorimeter measurement on Experimental Cement 1**

| Cement | Fe₂O₃ (Raw mix mass%) | Mn₂O₃ (Raw mix mass%) | TiO₂ (Raw mix mass %) | Burning temperature (°C) | L* (Resulting Cement) |
|---|---|---|---|---|---|
| Experimental Cement 1 | 1.66% | 0.05% | 0.18% | 1260°C | 77.7 |

| Cement | Fe₂O₃ (Cement, Mass %) | Mn₂O₃ (Cement, Mass %) | | TiO₂ (Cement, Mass %) | L* (Cement) |
|---|---|---|---|---|---|
| Experimental Cement 1 | 2.47% | 0.07% | | 0.27% | 77.7 |

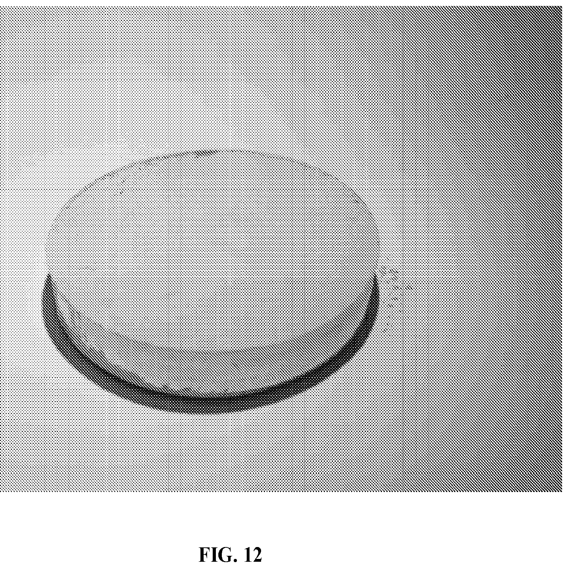

A carbonatable calcium silicate clinker (Experimental Cement 2, Reference Example) was produced using a 2-stage preheater kiln. No special consideration was made for the raw mix grinding, which proceeded using a typical steel vertical roller mill also used for the grinding of gray cement raw meal. The kiln was fired using natural gas. The burning temperature in the kiln was approximately 1,250°C and was operating under a normal (approximately 5% excess oxygen) burning atmosphere. The clinker was cooled using a rotary cooler with no special cooling procedure employed. The result of grinding this clinker is a carbonatable calcium silicate cement with a reflectance (L-value) of 80.0. The findings of this production are summarized in TABLE 2. An exemplary photo of Experimental Cement 2 is shown in **FIG. 12****.**

**Table 2: The raw material composition (from XRF), burning zone temperature, and L-value reflectance as determined by spectrocolorimeter measurement on Experimental Cement 2**

| Cement | Fe₂O₃ (Raw mix mass%) | Mn₂O₃ (Raw mix mass%) | TiO₂ (Raw mix mass %) | Burning temperature (°C) | L* (Resulting Cement) |
|---|---|---|---|---|---|
| Experimental Cement 2 | 1.34% | 0.04% | 0.17% | 1250°C | 80.0 |
| | | | | | |

| Cement | Fe₂O₃ (Cement, Mass %) | Mn₂O₃ (Cement, Mass %) | | TiO₂ (Cement, Mass %) | L* (Cement) |
|---|---|---|---|---|---|
| Experimental Cement 2 | 1.94% | 0.06% | | 0.22% | 80.0 |

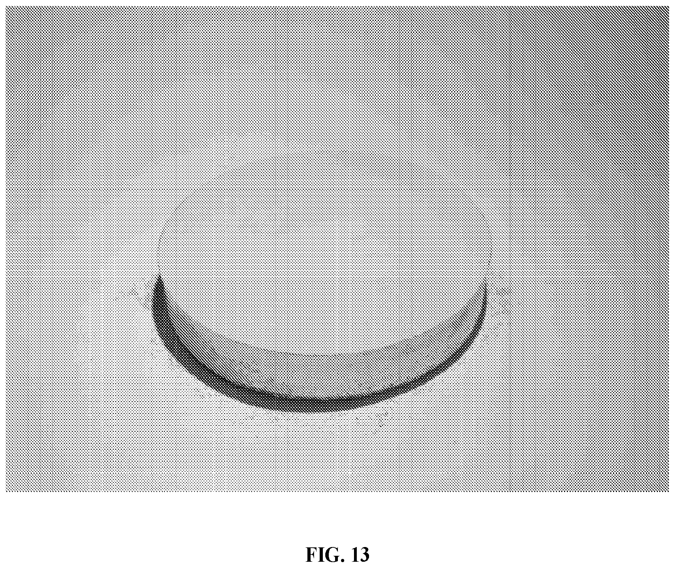

A carbonatable calcium silicate clinker was produced using a 5-stage precalciner kiln. No special consideration was made for the raw mix grinding, which proceeded using a vertical roller mill also used for grinding of ordinary gray cement raw meal (steel grinding surfaces). The kiln was fired with a low-ash coal. The burning temperature in the kiln was approximately 1,350 °C and was operating under a normal (approximately 5% excess oxygen) burning atmosphere. No bleaching process was employed. The cement clinker was cooled using a reciprocating grate cooler with no special cooling procedure employed. The result of grinding this clinker is carbonatable calcium silicate cement with a reflectance (L-value) of 88.8%. The findings of this production are summarized in TABLE 3. An exemplary photo of Experimental Cement 3 is shown in **FIG. 13****.**

**Table 3: The raw material composition (from XRF), burning zone temperature, and L-value reflectance as determined by spectrocolorimeter measurement on Experimental Cement 3**

| Cement | Fe₂O₃ (Raw mix mass%) | Mn₂O₃ (Raw mix mass%) | TiO₂ (Raw mix mass %) | Burning temperature (°C) | L* (Resulting Cement) |
|---|---|---|---|---|---|
| Experimental Cement 3 | 0.51% | 0.02% | Not detected | 1350°C | 88.8 |

| Cement | Fe₂O₃ (Cement, Mass %) | Mn₂O₃ (Cement, Mass %) | | TiO₂ (Cement, Mass %) | L* (Cement) |
|---|---|---|---|---|---|
| Experimental Cement 3 | 0.79% | 0.03% | | Not Detected | 88.8 |

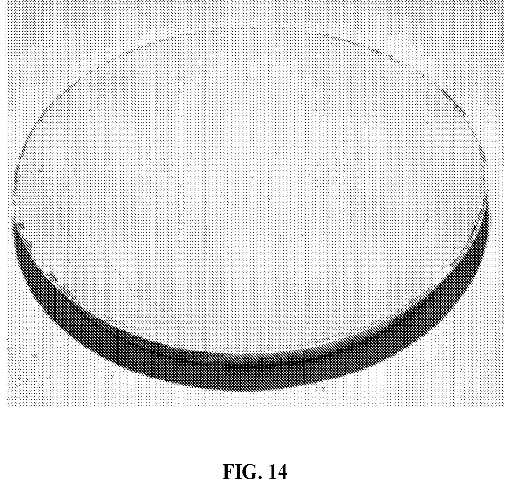

A carbonatable calcium silicate clinker was produced using a 4-stage preheater kiln. No special consideration was made for the raw mix grinding, which proceeded using a ball mill also used for grinding of ordinary gray cement raw meal (steel grinding surfaces). The kiln was fired with a coal and waste plastic fuel mixture similar to that used in gray cement production. The burning temperature in the kiln was about 1,300 °C and was operating under a normal (about 5% excess oxygen) burning atmosphere. No bleaching process was employed. The cement clinker was cooled using a reciprocating grate cooler with no special cooling procedure employed. The result of grinding this clinker is carbonatable calcium silicate cement with a reflectance (L-value) of 82.1%. The findings of this production are summarized in TABLE 4. An exemplary photo of Experimental Cement 3 is shown in **FIG. 14****.**

**Table 4: The raw material composition (from XRF), burning zone temperature, and L-value reflectance as determined by spectrocolorimeter measurement on Experimental Cement 4 (Reference Example)**

| Cement | Fe₂O₃ (Raw mix mass%) | Mn₂O₃ (Raw mix mass%) | TiO₂ (Raw mix mass %) | Burning temperature (°C) | L* (Resulting Cement) |
|---|---|---|---|---|---|
| Experimental Cement 4 | 1.22% | 0.04% | 0.13% | 1300°C | 82.1 |

| Cement | Fe₂O₃ (Cement, Mass %) | Mn₂O₃ (Cement, Mass %) | | TiO₂ (Cement, Mass %) | L* (Cement) |
|---|---|---|---|---|---|
| Experimental Cement 4 | 1.79% | 0.05% | | 0.21% | 82.1 |

Applicant's disclosure is described herein in preferred embodiments with reference to the Figures, in which like numbers represent the same or similar elements. Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

The described features, structures, or characteristics of Applicant's disclosure may be combined in any suitable manner in one or more embodiments. In the description herein, numerous specific details are recited to provide a thorough understanding of embodiments of the invention. One skilled in the relevant art will recognize, however, that Applicant's composition and/or method may be practiced without one or more of the specific details. In other instances, well-known structures, materials, or operations are not shown or described in detail to avoid obscuring aspects of the disclosure.

In this specification and the appended claims, the singular forms "a," "an," and "the" include plural reference, unless the context clearly dictates otherwise.

Unless defined otherwise, all technical and scientific terms used herein have the same meaning as commonly understood by one of ordinary skill in the art. Methods recited herein may be carried out in any order that is logically possible, in addition to a particular order disclosed.

### Equivalents

The representative examples disclosed herein are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. The examples contain important additional information, exemplification and guidance that can be adapted to the practice of this invention in its various embodiments.

## Claims

1. A white carbonatable calcium silicate cement composition, comprising:
one or more discrete crystalline calcium silicate phases selected from CS (wollastonite or pseudowollastonite), C3S2 (rankinite), C2S (belite, larnite, bredigite), and
an amorphous calcium silicate phase,
wherein the one or more discrete crystalline calcium silicate phases form about 30% or more by mass of the total phases, and wherein
elemental Ca and elemental Si are present in the composition at a molar ratio from about 0.8 to about 1.2;
metal oxides of Al, Fe and Mg are present at about 30% or less by mass;
the total color-imparting oxides of one or more of metals selected from Fe, Ti, Mn and Cr are present in an amount of less than about 1.5% by mass of the total cement composition;
wherein the cement composition is **characterized by** a reflectance value (L*), as measured from the Hunter L*a*B color scale, of greater than about 85%; and
wherein each of the crystalline and amorphous phases is suitable for carbonation with CO₂.

2. The composition of claim 1, wherein the cement composition is suitable for carbonation with CO₂ at a temperature of about 30°C to about 90°C to form a composite material comprising a binder matrix with a mass gain of about 10% or more.

3. The composition of claim 1 or 2, comprising one or more residual SiO₂ and CaO phases.

4. The composition of any of claims 1-3, comprising one or more melilite phases having the general formula (Ca,Na,K)₂[(Mg, Fe²⁺,Fe³⁺,Al,Si)₃0₇], optionally wherein the one or more melilite phases are **characterized by** a refractive index between about 1.5 and about 1.8.

5. The composition of any of claims 1-4, wherein the composition is a powder having a reflectance value (L*), as measured from the Hunter L*a*B color scale, of greater than about 90%, or greater than about 95%.

6. The composition of any of claims 1-5, wherein the metal oxides of one or more metal selected from Fe, Ti, Mn and Cr are incorporated into a melilite phase; or
wherein the metal oxides of one or more metal selected from Fe, Ti, Mn and Cr are incorporated into an amorphous phase; or
wherein the metal oxides of one or more metal selected from Fe, Ti, Mn and Cr are incorporated into a melilite phase and an amorphous phase.

7. A method for producing a white carbonatable calcium silicate cement, comprising:
providing a raw material set comprising CaO and SiO₂;
grinding the raw material set to obtain a precursor mixture, wherein the molar ratio of CaO to SiO₂ is from about 0.8 to about 1.2, wherein the precursor mixture comprises: (i) less than about 30% by mass the oxides of Al, Fe and Mg, and (ii) less than about 1.5% by mass of total metal oxides of one or more metals selected from Fe, Ti, Mn and Cr;
firing the precursor mixture to a temperature in the range from about 1,300°C to about 1,400°C to obtain a white carbonatable calcium silicate clinker;
wherein the obtained white carbonatable calcium silicate clinker comprises one or more discrete crystalline calcium silicate phases selected from CS (wollastonite or pseudowollastonite), C3S2 (rankinite), C2S (belite, larnite, bredigite), and an amorphous calcium silicate phase, wherein the one or more discrete crystalline calcium silicate phases form about 30% or more by mass of the total phases, wherein each of the crystalline and amorphous phases is suitable for carbonation with CO₂; and
grinding the white carbonatable calcium silicate clinker to a fineness of about 200 to about 800 m²/kg to produce the white carbonatable calcium silicate cement having a reflectance value (L*), as measured from the Hunter L*a*B color scale, of greater than about 85%.

8. The method of claim 7, wherein the precursor mixture is prepared from a raw material set selected from limestone, sand, silts, sandstones, silica-rich clays, diatomaceous earths, marl, fly ash, and silica fume.

9. The method of claim 7 or 8, wherein after firing the white carbonatable calcium silicate clinker is subjected to cooling by forced air in the range of about 1,400°C to about 500°C under an uncontrolled atmosphere or under a reducing atmosphere; or wherein after firing the white carbonatable calcium silicate clinker is subjected to a cooling in the range of about 1,400°C to about 500°C by quenching in water.

10. The method of any of claims 7-9, wherein grinding the raw material set to obtain a precursor mixture is performed in a grinder with a steel grinding surface.

11. The method of any of claims 7-10, wherein grinding the white carbonatable calcium silicate clinker achieves a fineness of about 200 m²/kg to about 400 m²/kg to produce the white carbonatable calcium silicate cement; or
wherein grinding the white carbonatable calcium silicate clinker achieves a fineness of about 400 m²/kg to about 800 m²/kg to produce the white carbonatable calcium silicate cement, optionally a fineness of about 400 m²/kg to about 600 m²/kg to produce the white carbonatable calcium silicate cement.

## Patentansprüche

1. Weiße karbonisierbare Calciumsilicat-Zementzusammensetzung, Folgendes umfassend:
eine oder mehrere diskrete kristalline Calciumsilicatphasen, ausgewählt aus CS (Wollastonit oder Pseudowollastonit), C3S2 (Rankinit), C2S (Belit, Larnit, Bredigit) und einer amorphen Calciumsilicatphase, wobei die eine oder die mehreren diskreten kristallinen Calciumsilicatphasen etwa 30 Massen-% oder mehr Massen-% der Gesamtphasen bilden, wobei elementares Ca und elementares Si in der Zusammensetzung in einem Molverhältnis von etwa 0,8 bis etwa 1,2 vorliegen;
Metalloxide von Al, Fe und Mg, die mit etwa 30 Massen-% oder weniger vorliegen;
die gesamten farbvermittelnden Oxide eines oder mehrerer Metalle, ausgewählt aus Fe, Ti, Mn und Cr, die in einer Menge von weniger als etwa 1,5 Massen-% der gesamten Zementzusammensetzung vorliegen;
wobei die Zementzusammensetzung durch einen anhand der Hunter L*a*B-Farbskala gemessenen Reflexionswert (L*) von mehr als etwa 85 % gekennzeichnet ist; und
wobei jede der kristallinen und amorphen Phasen zur Karbonisierung mit CO₂ geeignet ist.

2. Zusammensetzung nach Anspruch 1, wobei die Zementzusammensetzung zur Karbonisierung mit CO₂ bei einer Temperatur von etwa 30 °C bis etwa 90 °C geeignet ist, um ein Verbundmaterial zu bilden, das eine Bindemittelmatrix mit einem Massengewinn von etwa 10 % oder mehr umfasst.

3. Zusammensetzung nach Anspruch 1 oder 2, umfassend eine oder mehrere SiO₂-und CaO-Restphasen.

4. Zusammensetzung nach einem der Ansprüche 1 bis 3, umfassend eine oder mehrere Melilitphasen mit der allgemeinen Formel (Ca,Na,K)₂[(Mg, Fe²⁺,Fe³⁺,Al,Si)₃0₇], wobei gegebenenfalls die eine oder die mehreren Melilitphasen durch einen Brechungsindex zwischen etwa 1,5 und etwa 1,8 gekennzeichnet sind.

5. Zusammensetzung nach einem der Ansprüche 1 bis 4, wobei die Zusammensetzung ein Pulver mit einem anhand der Hunter L*a*B-Farbskala gemessenen Reflexionswert (L*) von mehr als etwa 90 % oder mehr als etwa 95 % ist.

6. Zusammensetzung nach einem der Ansprüche 1 bis 5, wobei die Metalloxide eines oder mehrerer, aus Fe, Ti, Mn und Cr ausgewählter Metalle in eine Melilitphase eingebaut sind; oder
wobei die Metalloxide eines oder mehrerer, aus Fe, Ti, Mn und Cr ausgewählter Metalle in eine amorphe Phase eingebaut sind; oder
wobei die Metalloxide eines oder mehrerer, aus Fe, Ti, Mn und Cr ausgewählter Metalle in eine Melilitphase und eine amorphe Phase eingebaut sind.

7. Verfahren zur Herstellung eines weißen karbonisierbaren Calciumsilicatzements, umfassend:
Bereitstellen eines Rohmaterialsatzes, umfassend CaO und SiO₂;
Mahlen des Rohmaterialsatzes, um eine Vorläufermischung zu erhalten, wobei das Molverhältnis von CaO zu SiO₂ etwa 0,8 bis etwa 1,2 beträgt, wobei die Vorläufermischung umfasst:
(i) weniger als etwa 30 Massen-% der Oxide von Al, Fe und Mg und (ii) weniger als etwa 1,5 Massen-% der gesamten Metalloxide eines oder mehrerer Metalle, ausgewählt aus Fe, Ti, Mn und Cr;
Brennen der Vorläufermischung auf eine Temperatur im Bereich von etwa 1.300 °C bis etwa 1.400 °C, um einen weißen karbonisierbaren Calciumsilicatklinker zu erhalten;
wobei der erhaltene weiße karbonisierbare Calciumsilicatklinker eine oder mehrere diskrete kristalline Calciumsilicatphasen umfasst, ausgewählt aus CS (Wollastonit oder Pseudowollastonit), C3S2 (Rankinit), C2S (Belit, Larnit, Bredigit) und einer amorphen Calciumsilicatphase, wobei die eine oder die mehreren diskreten kristallinen Calciumsilicatphasen etwa 30 Massen-% oder mehr Massen-% der Gesamtphasen bilden, wobei jede der kristallinen und amorphen Phasen zur Karbonisierung mit CO₂ geeignet ist; und
Mahlen des weißen karbonisierbaren Calciumsilicatklinkers auf eine Feinheit von etwa 200 bis etwa 800 m²/kg, um den weißen karbonisierbaren Calciumsilicatzement mit einem anhand der Hunter L*a*B-Farbskala gemessenen Reflexionswert (L*) von mehr als etwa 85 % herzustellen.

8. Verfahren nach Anspruch 7, wobei die Vorläufermischung aus einem Rohmaterialsatz hergestellt wird, der aus Kalkstein, Sand, Schlick, Sandsteinen, kieselsäurehaltigen Tonen, Kieselgur, Mergel, Flugasche und Kieselsäuredampf ausgewählt ist.

9. Verfahren nach Anspruch 7 oder 8, wobei der weiße karbonisierbare Calciumsilicatklinker nach dem Brennen durch Druckluft im Bereich von etwa 1.400 °C auf etwa 500 °C unter einer unkontrollierten Atmosphäre oder unter einer reduzierenden Atmosphäre abgekühlt wird; oder
wobei nach dem Brennen der weiße karbonisierbare Calciumsilicatklinker durch Abschrecken in Wasser einer Abkühlung im Bereich von etwa 1.400 ºC auf etwa 500 ºC unterzogen wird.

10. Verfahren nach einem der Ansprüche 7 bis 9, wobei das Mahlen des Rohmaterialsatzes zum Erhalten einer Vorläufermischung in einer Mühle mit einer Stahlmahlfläche durchgeführt wird.

11. Verfahren nach einem der Ansprüche 7 bis 10, wobei das Mahlen des weißen karbonisierbaren Calciumsilicatklinkers eine Feinheit von etwa 200 m²/kg bis etwa 400 m²/kg erreicht, um den weißen karbonisierbaren Calciumsilicatzement herzustellen; oder
wobei das Mahlen des weißen karbonisierbaren Calciumsilicatklinkers eine Feinheit von etwa 400 m²/kg bis etwa 800 m²/kg erreicht, um den weißen karbonisierbaren Calciumsilicatzement herzustellen, gegebenenfalls eine Feinheit von etwa 400 m²/kg bis etwa 600 m²/kg, um den weißen karbonisierbaren Calciumsilicatzement herzustellen.

## Revendications

1. Composition d'un ciment de silicate de calcium carbonatable blanc, comprenant :
une ou plusieurs phases de silicate de calcium cristallin discrètes choisies parmi le CS (wollastonite ou pseudowollastonite), la C3S2 (rankinite), la C2S (bélite, larnite, brédigite) et
une phase de silicate de calcium amorphe,
l'une ou plusieurs phases de silicate de calcium cristallin discrètes formant environ 30 % ou plus en masse des phases totales, et
Ca élémentaire et Si élémentaire étant présents dans la composition à un rapport molaire d'environ 0,8 à environ 1,2 ;
des oxydes métalliques d'Al, de Fe et de Mg étant présents à environ 30 % ou moins en masse ;
les oxydes colorants totaux d'un ou de plusieurs des métaux choisis parmi Fe, Ti, Mn et Cr étant présents en une quantité inférieure à environ 1,5 % en masse de la composition totale de ciment ;
la composition de ciment étant **caractérisée par** une valeur de réflectance (L*), telle que mesurée à partir de l'échelle de couleurs Hunter L*a*B, supérieure à environ 85 % ; et
chacune des phases cristallines et amorphes étant appropriée pour la carbonatation avec du CO₂.

2. Composition selon la revendication 1, la composition de ciment étant appropriée pour la carbonatation avec du CO₂ à une température d'environ 30 °C à environ 90 °C pour former un matériau composite comprenant une matrice liante avec un gain de masse d'environ 10 % ou plus.

3. Composition selon la revendication 1 ou 2, comprenant une ou plusieurs phases de SiO₂ et de CaO résiduelles.

4. Composition selon l'une quelconque des revendications 1 à 3, comprenant une ou plusieurs phases de mélilite ayant la formule générale (Ca, Na, K)₂[(Mg, Fe²⁺, Fe³⁺, Al, Si)₃0₇], éventuellement l'une ou plusieurs phases de mélilite étant **caractérisées par** un indice de réfraction compris entre environ 1,5 et environ 1,8.

5. Composition selon l'une quelconque des revendications 1 à 4, la composition étant une poudre ayant une valeur de réflectance (L*), telle que mesurée à partir de l'échelle de couleurs Hunter L*a*B, supérieure à environ 90 % ou supérieure à environ 95 %.

6. Composition selon l'une quelconque des revendications 1 à 5, dans laquelle les oxydes métalliques d'un ou plusieurs métaux choisis parmi Fe, Ti, Mn et Cr sont incorporés dans une phase de mélilite ; ou
dans laquelle les oxydes métalliques d'un ou plusieurs métaux choisis parmi Fe, Ti, Mn et Cr sont incorporés dans une phase amorphe ; ou
dans laquelle les oxydes métalliques d'un ou plusieurs métaux choisis parmi Fe, Ti, Mn et Cr sont incorporés dans une phase de mélilite et une phase amorphe.

7. Procédé de production d'un ciment de silicate de calcium carbonatable blanc, comprenant :
la fourniture d'un ensemble de matières premières comprenant du CaO et du SiO₂ ;
le broyage de l'ensemble de matières premières pour obtenir un mélange de précurseurs, dans lequel le rapport molaire CaO à SiO₂ est d'environ 0,8 à environ 1,2, le mélange de précurseurs comprenant : (i) moins d'environ 30 % en masse des oxydes d'Al, de Fe et de Mg, et (ii) moins d'environ 1,5 % en masse des oxydes métalliques totaux d'un ou de plusieurs métaux choisis parmi Fe, Ti, Mn et Cr ;
la cuisson du mélange de précurseurs à une température comprise dans la plage allant d'environ 1 300 °C à environ 1 400 °C pour obtenir un clinker de silicate de calcium carbonatable blanc ;
le clinker de silicate de calcium carbonatable blanc obtenu comprenant une ou plusieurs phases de silicate de calcium cristallin discrètes choisies parmi le CS (wollastonite ou pseudowollastonite), la C3S2 (rankinite), la C2S (belite, larnite, bredigite), et une phase de silicate de calcium amorphe, l'une ou plusieurs phases de silicate de calcium cristallin discrètes formant environ 30 % ou plus en masse des phases totales, chacune des phases cristallines et amorphes étant appropriée pour la carbonatation avec du CO₂ ; et
le broyage du clinker de silicate de calcium carbonatable blanc à une finesse d'environ 200 à environ 800 m²/kg pour produire le ciment de silicate de calcium carbonatable blanc ayant une valeur de réflectance (L*), telle que mesurée à partir de l'échelle de couleurs Hunter L*a*B, supérieur à environ 85 %.

8. Procédé selon la revendication 7, dans lequel le mélange de précurseurs est préparé à partir d'un ensemble de matières premières choisies parmi le calcaire, le sable, les limons, les grès, les argiles riches en silice, les terres de diatomées, la marne, les cendres volantes et les fumées de silice.

9. Procédé selon la revendication 7 ou 8, dans lequel, après la cuisson, le clinker de silicate de calcium carbonatable blanc est soumis à un refroidissement par air forcé dans la plage d'environ 1 400 °C à environ 500 °C sous une atmosphère non contrôlée ou sous une atmosphère réductrice ; ou dans lequel, après la cuisson, le clinker de silicate de calcium carbonatable blanc est soumis à un refroidissement dans la plage d'environ 1 400 °C à environ 500 °C par trempage dans l'eau.

10. Procédé selon l'une quelconque des revendications 7 à 9, dans lequel le broyage de l'ensemble de matières premières pour obtenir un mélange de précurseurs est effectué dans un broyeur avec une surface de broyage en acier.

11. Procédé selon l'une quelconque des revendications 7 à 10, dans lequel le broyage du clinker de silicate de calcium carbonatable blanc atteint une finesse d'environ 200 m²/kg à environ 400 m²/kg pour produire le ciment de silicate de calcium carbonatable blanc ; ou
dans lequel le broyage du clinker de silicate de calcium carbonatable blanc permet d'obtenir une finesse d'environ 400 m²/kg à environ 800 m²/kg pour produire le ciment de silicate de calcium carbonatable blanc, éventuellement une finesse d'environ 400 m²/kg à environ 600 m²/kg pour produire le ciment de silicate de calcium carbonatable blanc.
